# EUROPEAN PATENT APPLICATION

(11) **EP 4 826 779 A1**
(43) Date of publication of application: **21.10.2026**
(21) Application number: 24904282.1
(22) Date of filing: 13.12.2024
(51) Int. Cl.: H01M 4/134, H01M 4/66, H01M 4/1395

(54) **LITHIUM METAL ELECTRODE FOR LITHIUM SECONDARY BATTERY, AND METHOD FOR MANUFACTURING SAME**

(30) Priority: 15.12.2023 KR 20230183729
(71) Applicant: POSCO Holdings Inc., Pohang-si, Gyeongsangbuk-do 37859 (KR)
(72) Inventor: LEE, Garam, Pohang-si, Gyeongsangbuk-do 37859 (KR); KIM, Jin Hong, Pohang-si, Gyeongsangbuk-do 37859 (KR); BAE, Hongyeul, Pohang-si, Gyeongsangbuk-do 37859 (KR)
(74) Representative: Pfenning, Meinig & Partner mbB
(86) International application number: PCT/KR2024/020320
(87) International publication number: WO 2025/127717

(57) **Abstract**

The present invention relates to a lithium metal electrode and a method for manufacturing the same. The lithium metal electrode of the present invention includes a current collector and a protective layer disposed on at least one surface of the current collector, wherein the protective layer includes a powder-type carbon-based material and powder-type metal particles, and an average particle diameter of the metal particles is 250 nm or less.

## Description

### [TECHNICAL FIELD]

The present invention relates to a lithium secondary battery, and more particularly, to a lithium metal electrode for a lithium secondary battery and a method for manufacturing the same.

### [BACKGROUND ART]

In order to reduce the cost and increase the energy density of secondary batteries, it has become essential to use a lithium metal electrode as a negative electrode of a lithium secondary battery. Specifically, all-solid-state batteries have recently attracted attention as next-generation batteries for high energy density applications such as electric vehicles (EVs).

Since all-solid-state batteries do not use a liquid electrolyte, they have advantages in various aspects, such as excellent stability, high-voltage operation, improved energy density of a battery pack due to reduction of cooling- and safety-related auxiliary materials, and operability over a wide temperature range. In order to substantially realize high energy density in such an all-solid-state battery, a thick graphite-based negative electrode material having low capacity should be replaced with lithium, which is thin and has high capacity, and, in view of economic feasibility and energy density, a thin-film lithium metal electrode having a thickness of substantially 10 µm to 20 µm is required.

In general, in the case of a lithium metal electrode, there is difficulty in a technology for thinly manufacturing lithium metal through a commercialized process, and dendrite growth caused by non-uniform current density and electrochemical reactions during charging and discharging of a secondary battery has been a problem. This may induce continuous side reactions with an electrolyte and may lead to an internal short circuit in which a negative electrode and a positive electrode come into contact with each other. Such dendrite growth may also cause significant problems in terms of low lifespan characteristics and stability. For this reason, there is difficulty in practically utilizing an ultra-thin lithium metal negative electrode.

Various methods have been proposed as methods for suppressing dendrite growth and increasing lifespan, but there is a problem in that it is difficult to simultaneously implement high energy density through thinning of lithium and sufficient lifespan characteristics. In order to solve the above problem, a method of using a protective layer on a lithium metal electrode has been proposed, but there is a problem in that a sufficient lithium stacking rate and charge/discharge lifespan characteristics cannot be obtained.

### [DETAILED DESCRIPTION OF THE INVENTION]

### [Technical Problem]

A lithium metal electrode for a lithium secondary battery according to an embodiment of the present invention is intended to provide a lithium secondary battery in which lithium ion conductivity is improved to increase a lithium stacking rate and charge/discharge lifespan characteristics are improved.

A method for manufacturing a lithium metal electrode for a lithium secondary battery according to another embodiment of the present invention is intended to provide a method for manufacturing a lithium metal electrode for a lithium secondary battery having the above-described advantages.

### [Technical Solution]

A lithium metal electrode according to an embodiment of the present invention includes a current collector and a protective layer disposed on at least one surface of the current collector, wherein the protective layer includes a powder-type carbon-based material and powder-type metal particles, and an average particle diameter of the metal particles may be 250 nm or less. In an embodiment, the lithium metal electrode may include a metal layer disposed between the current collector and the protective layer, and the metal layer may include lithium.

In an embodiment, the metal particles in the protective layer may be included in an amount of 10 wt% to 30 wt% based on 100 wt% of the total amount of the carbon-based material and the metal particles. In an embodiment, the protective layer may have a thickness of 3 µm to 7 µm.

In an embodiment, the carbon-based material may include amorphous carbon, and the amorphous carbon may include one or more selected from the group consisting of acetylene black, Super P black, carbon black, Denka black, activated carbon, graphite, hard carbon, and soft carbon. In an embodiment, the metal particles may be a lithiophilic metal. In an embodiment, the metal particles may include one or more selected from the group consisting of In, Ag, Sn, Zn, Si, Al, and Bi.

In an embodiment, the metal particles may have an area of 30% to 50% based on 100% of an area of 17.5 µm × 22.5 µm in an SEM image of the protective layer. In an embodiment, an average particle diameter of the metal particles may be greater than an average particle diameter of the amorphous carbon. In an embodiment, a difference value between the average particle diameter of the metal particles and the average particle diameter of the amorphous carbon may be 10 nm to 250 nm.

A method for manufacturing a lithium metal electrode according to another embodiment of the present invention includes preparing a current collector, and forming a protective layer by coating, on at least one surface of the current collector, a slurry including a powder-type carbon-based material and powder-type metal particles, wherein an average particle diameter of the metal particles may be 250 nm or less.

In an embodiment, after the step of forming the protective layer, the method may include placing the current collector on which the protective layer is formed in a plating solution and then placing a lithium supply source at a predetermined distance from the protective layer, and applying a current between the current collector and the lithium supply source to form a metal layer including a lithium alloy in which the metal particles included in the protective layer and lithium precipitated from the lithium supply source are alloyed.

In an embodiment, after the step of forming the protective layer, the method may include placing the current collector on which the protective layer is formed in a plating solution and then placing a lithium supply source at a predetermined distance from the protective layer; and applying a current between the current collector and the lithium supply source to form a metal layer including a lithium alloy in which the metal particles included in the protective layer and lithium precipitated from the lithium supply source are alloyed.

In an embodiment, in the step of forming the protective layer, the metal particles and the carbon-based particles may be mixed at a weight ratio of 10:90 to 30:70. In an embodiment, in the step of forming the protective layer, the slurry may be coated to a range of 3 µm to 10 µm. In an embodiment, in the step of forming the protective layer, a binder may be further included in the slurry, and the content of the binder may be 1 part by weight to 15 parts by weight based on 100 parts by weight of the total amount of the carbon-based material and the metal particles.

### [Advantageous Effects]

A lithium metal electrode for a lithium secondary battery according to an embodiment of the present invention is intended to provide a lithium secondary battery in which lithium ion conductivity is improved to increase a lithium stacking rate and charge/discharge lifespan characteristics are improved by mixing amorphous carbon and metal particles in a protective layer and controlling an average particle diameter and distribution of the metal particles.

A method for manufacturing a lithium metal electrode for a lithium secondary battery according to another embodiment of the present invention is intended to provide a method for manufacturing a lithium metal electrode for a lithium secondary battery having the above-described advantages, wherein a protective layer in which amorphous carbon and metal particles are mixed is disposed on a current collector, lithium is stacked on a lower surface of the protective layer, and thus a separate lithiophilic metal layer is not introduced, thereby shortening process time.

### [BRIEF DESCRIPTION OF THE DRAWINGS]

FIG. 1 shows a lithium metal electrode manufactured according to an embodiment.
FIG. 2 is a schematic view of a method for manufacturing a lithium metal electrode of the present invention.
FIGS. 3A and 3B show surface and cross-sectional microstructures when a protective layer is disposed on a current collector.
FIG. 4 shows a metal layer formed on a lower surface of a protective layer by an electrodeposition process.
FIGS. 5A and 5B show electrodeposition appearances according to a maximum current density in electrodeposition processes according to an Example and a Comparative Example.
FIGS. 6A to 6C are EDS analysis photographs of a protective layer according to a Comparative Example of the present invention, and FIGS. 6D to 6F are EDS analysis photographs of a protective layer according to an Example of the present invention.
FIG. 7 shows cell lifespan evaluation of all-solid-state batteries using Examples and Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

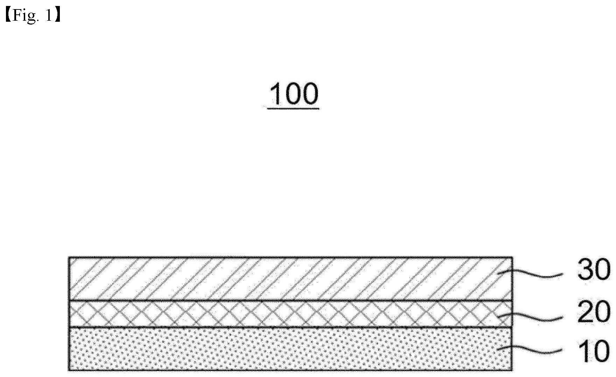

FIG. 1 shows a lithium metal electrode 100 manufactured according to an embodiment.

Referring to FIG. 1, the lithium metal electrode 100 according to an embodiment includes a current collector 10 and a protective layer 30 disposed on at least one surface of the current collector.

The current collector 10 may be a member for electrical connection in a lithium secondary battery. The current collector 10 may have a form of a foil, but is not limited thereto, and may have, for example, a form of a mesh, a foam, a rod, a wire, or a sheet woven from wires or fibers.

As the current collector 10, a material having electrical conductivity and having limited reactivity with lithium may be used. Specifically, the material of the current collector 10 may be, for example, one of copper, nickel, titanium, stainless steel, iron, gold, platinum, silver, tantalum, ruthenium, and alloys thereof, carbon, a conductive polymer, and a composite fiber in which a conductive layer is coated on a non-conductive polymer, or a combination thereof.

In an embodiment, the current collector 10 may have a thickness of 1 µm to 50 µm. When the current collector 10 is excessively thick, there is a problem in that the weight of the battery increases and energy density of the battery decreases. When the current collector 10 is excessively thin, there is a risk of overheating damage during high-current operation, and the current collector may be damaged by tension during a battery manufacturing process.

The protective layer 30 may be disposed on at least one surface of the current collector 10 and may include a carbon-based material and metal particles. The carbon-based material may include, for example, amorphous carbon. The amorphous carbon may be, for example, one or more selected from the group consisting of acetylene black, Super P black, carbon black, Denka black, activated carbon, graphite, hard carbon, and soft carbon, but is not limited thereto. The amorphous carbon may be in a powder form.

The metal particles may be, for example, a lithiophilic metal. The lithiophilic metal means a metal capable of reacting with lithium of a lithium supply source during a lithium electrodeposition process to form a lithium alloy. The lithiophilic metal may be, for example, one or more selected from the group consisting of In, Ag, Sn, Zn, Si, Al, and Bi. Specifically, the metal particles may be in a powder form rather than a liquid form. Since the metal particles have a powder form rather than a liquid form, there are advantages in that size control is easy and handling is also easy when applied to an electrode.

In an embodiment, the metal particles may have an average particle diameter (D50) of 250 nm or less. Specifically, the average particle diameter (D50) of the metal particles may be 20 nm to 200 nm, more specifically 20 nm to 100 nm, and still more specifically 30 nm to 70 nm. The average particle diameter (D50) of the metal particles means a particle diameter corresponding to a volume cumulative 50% of a particle size distribution of the metal particles.

As the average particle diameter (D50) of the metal particles satisfies the above-described range, there are advantages in that agglomeration of the metal particles is minimized to form an even distribution, and accordingly electrodeposition characteristics are excellent and lifespan characteristics are improved. When the average particle diameter (D50) of the metal particles is outside the upper limit of the above-described range, there is a problem in that the force by which the metal particles themselves attract lithium becomes too strong, making it difficult to electrodeposit lithium between the protective layer and the current collector. When the average particle diameter (D50) of the metal particles is outside the lower limit of the above-described range, there is a problem in terms of price competitiveness.

In an embodiment, the carbon-based material may have an average particle diameter D50 of 0.01 µm to 1 µm. As the average particle diameter of the carbon-based material satisfies the above-described range, there are advantages in that the thickness of the protective layer can be freely adjusted and dispersibility is excellent. When the average particle diameter of the carbon-based material is outside the upper limit of the above-described range, there is a problem in that it is difficult to make the protective layer thin and to control the degree of dispersion. When the average particle diameter of the carbon-based material is outside the lower limit of the above-described range, there is a problem in that workability decreases because the particles are excessively small.

In an embodiment, it can be confirmed that the average particle diameter of the metal particles is greater than the average particle diameter of the amorphous carbon. A difference value between the average particle diameter of the metal particles and the average particle diameter of the amorphous carbon may be 10 nm to 250 nm. The difference value means an absolute value, and as the above-described range is satisfied, the metal particles in the protective layer may be more uniformly dispersed.

In an embodiment, the metal particles in the protective layer 30 may be included in an amount of 10 wt% to 30 wt% based on 100 wt% of the total amount of the carbon-based material and the metal particles. Specifically, the metal particles may be included in an amount of 15 wt% to 25 wt%. More specifically, a weight ratio of the carbon-based material to the metal particles may be 90:10 to 70:30, specifically 85:15 to 75:25. As the metal particles are included in the protective layer 30 within the above-described range, there is an advantage in that lithium can be electrodeposited at an interface between the current collector 10 and the protective layer 30.

When the metal particles are included in the protective layer 30 outside the upper limit of the above-described range, not only does the cost of the metal particles primarily increase, but there is also a problem in that, when too many metal particles are distributed in the protective layer, lithium cannot be electrodeposited under the protective layer. When the metal particles are included in the protective layer 30 outside the lower limit of the above-described range, there is, conversely, a problem in that the force by which the metal particles attract lithium is too weak, causing lithium to be electrodeposited on an upper surface of the protective layer.

In an embodiment, the metal particles may have an area of 15% to 50%, based on 100% of an area of 22.5 µm × 17.5 µm in an SEM image of the protective layer 30. Specifically, the area may be 30% to 50%. As the metal particles are distributed in the above-described area, there is an advantage in that the metal particles can uniformly attract lithium to electrodeposit lithium on the current collector.

When the area is outside the upper limit of the above-described range, it means that too many metal particles are present, and thus a problem occurring when the metal particles are outside the upper limit of the above-described range occurs. When the area is outside the lower limit of the above-described range, it means that too few metal particles are present or the degree of dispersion is poor and the metal particles are agglomerated, and thus the above-described problem that occurs when the metal particles are outside the lower limit or when the average particle diameter of the metal particles is outside the upper limit occurs.

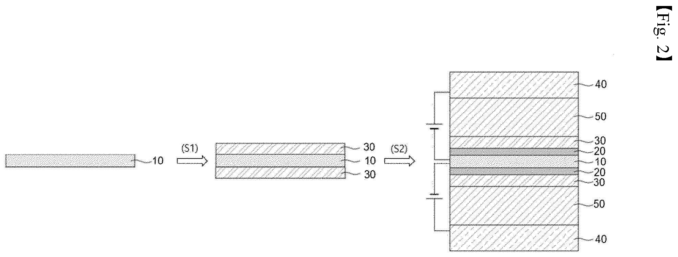

In an embodiment, the lithium metal electrode may include a metal layer 20 disposed between the current collector 10 and the protective layer 30. Specifically, the metal layer 20 may be positioned on the current collector 10 and may be an alloy layer including lithium. Specifically, the metal layer 20 may be a layer including a lithium alloy in which a lithiophilic metal included in the protective layer 30 and lithium precipitated from a lithium supply source 40 of FIG. 2 are alloyed by applying a current between the current collector 10 and the lithium supply source.

As described above, the lithium metal electrode of the present invention forms a lithium alloy layer through a reaction between the metal particles in the protective layer 30 and the lithium supply source 40, without a process of coating a separate metal layer under the protective layer 30, and is therefore economical because the time required for the entire electrode manufacturing process is shortened. In addition, by including the metal layer 20 including a lithium alloy in the lithium metal electrode, lithium electrodeposition is facilitated and battery lifespan characteristics can be improved.

In an embodiment, the metal layer 20 may have a thickness of 3 µm to 25 µm, and specifically 5 µm to 20 µm. When the metal layer 20 is excessively thick, when the lithium metal electrode of the present embodiment is applied to a secondary battery, there is a problem in that the weight and volume of the battery increase and energy density decreases. In addition, since time and cost of an electrodeposition process increase in proportion to thickness when forming the metal layer 20, the thickness of the metal layer 20 is preferably 20 µm or less.

When the metal layer 20 is excessively thin, when the lithium metal electrode of the present embodiment is applied to a secondary battery, there is a problem in that charge/discharge lifespan of the battery deteriorates. Specifically, during charging and discharging of the battery, lithium in the battery is gradually consumed due to side reactions between lithium included in the negative electrode active material layer, that is, the metal layer of the present invention, and the electrolyte solution, whereby battery capacity decreases, and since the retained amount of lithium capable of replenishing lithium consumed during charging and discharging decreases, charge/discharge lifespan of the battery deteriorates. Accordingly, the thickness of the metal layer 20 is preferably 3 µm or more.

In an embodiment, the protective layer 30 may have a thickness of 5 µm to 20 µm. Specifically, the thickness may be 5 µm to 10 µm. The thickness of the protective layer 30 may mean an average thickness of a region excluding the metal layer 20 including lithium. As the thickness of the protective layer 30 satisfies the above-described range, an ultra-thin lithium metal electrode can be provided.

When the thickness of the protective layer 30 is outside the upper limit of the above-described range, there is a problem in that the protective layer is excessively thick and conductivity decreases. When the thickness of the protective layer 30 is outside the lower limit of the above-described range, there is a problem in that the protective layer cannot properly function as a protective layer.

In an embodiment, the protective layer 30 may include a binder. The binder may be an aqueous binder, and the aqueous binder may be one or more selected from the group consisting of rubber-based binders selected from acrylonitrile-butadiene rubber, styrene-butadiene rubber (SBR), and acrylic rubber, and polymer resins such as hydroxyethyl cellulose, carboxymethyl cellulose, and polyvinylidene fluoride, but is not limited thereto.

Here, the binder may be added in an amount of 1 part by weight to 15 parts by weight, and specifically 3 parts by weight to 10 parts by weight, based on 100 parts by weight of the total amount of the carbon-based material and the metal particles. When the content of the binder satisfies the above range, particles constituting the protective layer can be effectively bound to form a protective layer having excellent performance without causing deterioration of battery energy density due to an increase in weight and volume, thereby further improving lifespan characteristics of the secondary battery.

When the content of the binder is excessively smaller than the above range, there is a problem in that binding force between particles is reduced in forming the protective layer, and when the content of the binder is excessively greater than the above range, not only does energy density decrease, but also resistance of the protective layer greatly increases, thereby hindering lithium ion conduction.

In an embodiment, the lithium metal electrode 100 may further include a coating layer disposed on at least a partial region on the protective layer 30. The coating layer may be formed by a reaction between electrodeposited lithium metal of the lithium supply source 40 and a plating solution during manufacture of the metal layer 20. The thickness, composition, properties, and the like of the coating layer can be controlled by controlling the composition of the plating solution used and conditions of the electrodeposition process.

In an embodiment, the coating layer may include at least a portion of LiF. By including the coating layer including at least a portion of LiF, lifespan can be improved and dendrite growth can be prevented due to high ionic conductivity during battery operation.

The coating layer may have a thickness of 2 nm to 2 µm. Specifically, the coating layer may have a thickness of 10 nm to 500 nm. When the thickness of the coating layer is excessively large, lithium ion conductivity decreases and interfacial resistance increases, thereby deteriorating charge/discharge characteristics when applied to a battery. When the thickness of the coating layer is excessively small, the coating layer may be easily lost in the process of applying the lithium metal electrode according to the embodiment to a battery. Accordingly, the coating layer may have a small thickness within the above thickness range and may be uniformly and densely formed over the entire protective layer 30.

FIG. 2 is a schematic view of a method for manufacturing the lithium metal electrode 100 of the present invention.

Referring to FIG. 2, a method for manufacturing a lithium metal electrode 100 according to an embodiment includes preparing a current collector 10, and forming a protective layer 30 by coating, on at least one surface of the current collector 10, a slurry including a carbon-based material and metal particles using a coating composition including a lithiophilic component.

In the step of preparing the current collector 10, as the current collector 10, a material having electrical conductivity and having limited reactivity with lithium may be used. Specifically, the material of the current collector 10 may be, for example, one of copper, nickel, titanium, stainless steel, gold, platinum, silver, tantalum, ruthenium, and alloys thereof, carbon, a conductive polymer, and a composite fiber in which a conductive layer is coated on a non-conductive polymer, or a combination thereof.

The protective layer 30 may be formed on a surface of the current collector 10 using a slurry including the carbon-based material and the metal particles. The protective layer 30 may be formed by applying a slurry formed by mixing the amorphous carbon and a binder in water using at least one method among a doctor blade method, a dip method, a reverse roll method, a direct roll method, a gravure method, an extrusion method, and a brush coating method. The protective layer 30 may further include a binder. Detailed descriptions of the carbon-based material and the metal particles may refer to FIG. 1 described above.

In an embodiment, in the step of forming the protective layer, the metal particles and the carbon-based particles may be mixed at a weight ratio of 10:90 to 30:70. Specifically, the weight ratio may be 15:85 to 25:75. Advantages and problems according to the weight ratio may refer to FIG. 1 described above.

In an embodiment, in the step of forming the protective layer 30, the slurry may be coated to a range of 3 µm to 10 µm. Specifically, the slurry may be coated to a range of 4 µm to 7 µm. As the slurry is coated within the above-described range, the role of the protective layer can be easily performed while securing ionic conductivity of the protective layer.

When the slurry is outside the upper limit of the above-described range, there is a problem in that it becomes difficult to secure uniformity after drying. When the slurry is outside the lower limit of the above-described range, there is a problem in that the slurry cannot function as a protective layer.

In an embodiment, the method for manufacturing a lithium metal electrode includes, after forming the protective layer 30, placing the current collector 10 on which the protective layer 30 is formed in a plating solution 50 and then placing a lithium supply source 40 at a predetermined distance from the protective layer 30, and applying a current between the current collector 10 and the lithium supply source 40 to form a metal layer 20 including a lithium alloy in which a lithiophilic component included in the protective layer 30 and lithium precipitated from the lithium supply source 40 are alloyed.

Specifically, after the current collector 10 on which the protective layer 30 is formed is placed in the plating solution, the lithium supply source 40 is placed at a predetermined distance from the protective layer 30. The lithium supply source 40 may be, for example, lithium metal, a lithium alloy, a foil in which the lithium metal or lithium alloy is pressed onto a current collector, a plating solution in which a lithium salt is dissolved, or the like.

The plating solution 50 may be prepared by dissolving a lithium salt in a plurality of solvents. Specifically, the lithium salt may be LiCl, LiBr, LiI, LiCO₃, LiNO₃, LiFSI, LiTFSI, LiBF₄, LiPF₆, LiAsF₆, LiClO₄, LiN(SO₂CF₃)₂, LiBOB, or a combination thereof. The concentration of the lithium salt may be 1.0 M to 3.0 M based on the entire electrolyte solution.

Specifically, in the present embodiment, the plating solution 50 is characterized by including a nitrogen-based compound as at least one of the lithium salt and the plurality of solvents. The nitrogen-based compound may include, for example, one or more selected from the group consisting of lithium nitrate, lithium bis(fluorosulfonyl)imide, lithium bis(trifluoromethane sulfonimide), ε-caprolactam, N-methyl-ε-caprolactam, triethylamine, and tributylamine.

Among the nitrogen-based compounds, at least one of lithium nitrate, lithium bis(fluorosulfonyl)imide, and lithium bis(trifluoromethane sulfonimide) may be used as a lithium salt.

Among the nitrogen-based compounds, at least one of ε-caprolactam, N-methyl-ε-caprolactam, triethylamine, and tributylamine may be used as a non-aqueous solvent.

The plating solution 50 may be prepared using only the nitrogen-based compound, but may include a general non-aqueous solvent as an auxiliary solvent in consideration of viscosity and the like of the plating solution 50.

The auxiliary solvent may include, for example, one or more selected from the group consisting of ethylene carbonate, propylene carbonate, dimethyl carbonate, ethyl methyl carbonate, diethyl carbonate, 1,2-dimethoxyethane, diethylene glycol dimethyl ether, tetraethylene glycol dimethyl ether, tetrahydrofuran, 1,3-dioxolane, 1,4-dioxane, and 1,3,5-trioxane.

In an embodiment, the auxiliary solvent may be included in an amount of 5 wt% to 70 wt%, preferably 10 wt% to 60 wt%, based on 100 wt% of the entire plating solution 50, but is not limited thereto. However, when the auxiliary solvent is included within the above range, the viscosity of the plating solution 50 is appropriate, and thus electrodeposition time can be shortened, but the present invention is not limited thereto.

In an embodiment, the plating solution 50 may further include a fluorine-based compound. When the plating solution 50 further includes the fluorine-based compound, there is an advantage in that properties of a coating layer on the metal layer or the protective layer can be improved.

The fluorine-based compound may include, for example, one or more selected from the group consisting of lithium difluorophosphate, lithium hexafluorophosphate, lithium difluoro bisoxalato phosphate, lithium tetrafluoro oxalato phosphate, lithium difluoro oxalate borate, lithium difluoro oxalato borate, lithium tetrafluoro oxalato borate, fluoroethylene carbonate, difluoroethylene carbonate, and 1,1,2,2-tetrafluoroethyl 2,2,3,3-tetrafluoropropyl ether.

The fluorine-based compound may be included in an amount of 0.1 wt% to 30 wt%, preferably 1 wt% to 20 wt%, and more preferably 1 wt% to 10 wt%, based on 100 wt% of the entire plating solution 50. When the fluorine-based compound is included within the above range, the nitrogen-based compound and the fluorine-based compound in the plating solution 50 smoothly interact with each other, and thus there is an advantage in that the effect of improving properties of the coating layer is excellent. In addition, excessive generation of LiF by direct reaction between the fluorine-based compound and lithium is suppressed, which is advantageous in that electrochemical properties are excellent.

Next, after an insulating film is positioned between the current collector 10 and the lithium supply source 40, the current collector 10, the lithium supply source 40, and the insulating film may be stacked and constrained in both directions using a constraining device. As non-limiting examples of the constraining device, a method generally used in the art, such as a manual clamping method or a uniaxial pressing method using hydraulic pressure or pneumatic pressure, may be used.

In the step of applying a current to form the metal layer 20 including lithium on at least one surface of the current collector 10, the current density of the applied current may be in a range of 0.1 mA/cm² to 100 mA/cm², more specifically 0.2 mA/cm² to 50 mA/cm², 5 mA/cm² to 30 mA/cm², or 7 mA/cm² to 25 mA/cm².

In an embodiment, the time for applying the current may be in a range of 0.05 hours to 50 hours, and more specifically 0.25 hours to 25 hours.

In an embodiment, the step of applying the current to form a lithium metal layer on at least one surface of the current collector may be performed at least once at different current densities. The step of applying the current may be performed in multiple stages. Specifically, the step of applying the current in multiple stages may be performed by increasing the current density stepwise from a low current density to a high current density for predetermined times. For example, the step of applying the current may be performed by electrodeposition while increasing stepwise in the order of 0.1 mA/cm² to 0.3 mA/cm², 0.3 mA/cm² to 0.7 mA/cm², and 0.8 mA/cm² to 1.5 mA/cm².

In an embodiment, the step of applying the current to form the metal layer 20 on at least one surface of the current collector 10 may include electrodepositing at a maximum current density in a range of 6 mA/cm² to 12 mA/cm². Specifically, the maximum current density may be in a range of 8 mA/cm² to 12 mA/cm². The maximum current density means a limit of current density at which lithium electrodeposited in the electrodeposition process can be precipitated between the protective layer 30 and the current collector 10.

The step of electrodepositing at the maximum current density may be, for example, a step finally performed after a step of precipitating in multiple stages in order to precipitate lithium between the current collector 10 and the protective layer 30. When the maximum current density satisfies the above range, lithium is appropriately precipitated between the current collector 10 and the protective layer 30, and there are advantages in that lifespan characteristics of the battery and bonding strength between the current collector 10 and the protective layer 30 are excellent.

When the maximum current density is outside the upper limit of the above-described range, since lithium is precipitated on the surface of the protective layer 30, there is a problem in that a targeted stabilized electrode structure cannot be secured. When the maximum current density is outside the lower limit of the above-described range, there is a problem of reduced productivity because the time for electrodepositing lithium increases.

In an embodiment, in the step of applying the current to form the metal layer 20 including lithium on at least one surface of the current collector 10, precipitated lithium may be electrodeposited to a thickness in a range of 5 µm to 15 µm. Specifically, the precipitated lithium may be electrodeposited to a thickness in a range of 8 µm to 12 µm. The thickness of the precipitated lithium may mean a height in a vertical direction of lithium disposed between the current collector 10 and the protective layer 30.

When the thickness of the precipitated lithium is outside the upper limit of the above thickness range, not only does energy density of the battery decrease, but also process time and the amount of metal raw materials used increase when forming the metal layer. When the thickness of the precipitated lithium is outside the lower limit of the above thickness range, there is a problem in that initial Coulombic efficiency is reduced due to initial irreversibility and charge/discharge performance deteriorates because surplus lithium is insufficient.

In an embodiment, in the step of applying the current to form the metal layer 20 including lithium on at least one surface of the current collector 10, the thickness of the metal layer 20 including the lithium alloy may be controlled to 5 µm to 20 µm. Detailed descriptions of the thickness of the metal layer 20 may refer to the above description of FIG. 1.

A lithium secondary battery according to another embodiment of the present invention includes a positive electrode, a negative electrode, and an electrolyte positioned between the positive electrode and the negative electrode. Here, the negative electrode may be the lithium metal electrode according to the present invention.

In an embodiment, the lithium secondary battery may include an electrode assembly including a positive electrode including a positive electrode active material, a negative electrode which is the lithium metal electrode of the present invention, and a separator disposed between the positive electrode and the negative electrode. The electrode assembly may be wound or folded and accommodated in a battery case.

Thereafter, an electrolyte may be injected into the battery case and sealed to complete a secondary battery. At this time, the battery case may have a cylindrical, prismatic, pouch, coin, or other shape.

The positive electrode may include a positive electrode active material layer and a positive electrode current collector. The positive electrode active material layer may include, for example, a Li compound including at least one metal among Ni, Co, Mn, Al, Cr, Fe, Mg, Sr, V, La, and Ce, and at least one non-metal element selected from the group consisting of O, F, S, P, and combinations thereof.

In an embodiment, a conductive material may be further added to the positive electrode active material layer. The conductive material may be, for example, carbon black, ultrafine graphite particles, fine carbon such as acetylene black, a nano metal particle paste, or the like, but is not limited thereto.

The positive electrode current collector serves to support the positive electrode active material layer. As the positive electrode current collector, for example, an aluminum foil, a nickel foil, or a combination thereof may be used, but is not limited thereto.

As the electrolyte filled in the lithium secondary battery, a non-aqueous electrolyte solution, a solid electrolyte, or the like may be used. Specifically, the electrolyte may be a solid electrolyte. The non-aqueous electrolyte solution may include, for example, a lithium salt such as lithium hexafluorophosphate or lithium perchlorate, and a solvent such as ethylene carbonate, propylene carbonate, or butylene carbonate. In addition, as the solid electrolyte, for example, a gel polymer electrolyte in which an electrolyte solution is impregnated in a polymer electrolyte such as polyethylene oxide or polyacrylonitrile, or an inorganic solid electrolyte such as LiI or Li₃N may be used.

The separator separates the positive electrode and the negative electrode and provides a movement path for lithium ions, and any separator commonly used in lithium secondary batteries may be used. Specifically, the separator may have low resistance to ion movement of the electrolyte and excellent electrolyte solution impregnation ability. The separator may be, for example, selected from glass fibers, polyester, polyethylene, polypropylene, polytetrafluoroethylene, or combinations thereof, and may be in the form of a nonwoven fabric or a woven fabric. Meanwhile, when a solid electrolyte is used as the electrolyte, the solid electrolyte may also serve as the separator.

Hereinafter, embodiments of the present invention will be described in detail. However, these are provided as examples, and the present invention is not limited thereto, and the present invention is only defined by the scope of the claims to be described below.

### <Experimental Example>

### Preparation of Negative Electrode for Lithium Secondary Battery

### <Example 1>

### <Preparation of Current Collector>

A nickel (Ni) current collector was prepared for use in a negative electrode for a lithium secondary battery of the present invention.

### <Formation of Protective Layer>

A protective layer having a thickness of about 5 µm was formed on upper surfaces of both surfaces of the nickel current collector by slurry coating using a comma coater. Specifically, in order to prepare a slurry used to form the protective layer, amorphous carbon and metal particles were mixed. In addition, a binder and a solvent were mixed. At this time, acetylene black was used as the amorphous carbon, and silver (Ag) was used as the metal particles. A weight ratio of the amorphous carbon to the metal particles was 80:20.

At this time, an average particle diameter of the silver (Ag) particles, which were the metal particles, was 65 nm.

In addition, carboxymethyl cellulose (CMC) and styrene-butadiene rubber (SBR), which were mixed binders, were added in amounts of 3 parts by weight and 6 parts by weight, respectively, based on the total amount of the amorphous carbon and the metal nitride. In addition, as a solvent, water and ethylene glycol (EG) were used at a weight ratio of 80:20. The total amount of the solvent was about 25 wt% based on the total amount of the amorphous carbon, the metal particles, and the binder to maintain a viscosity suitable for coating.

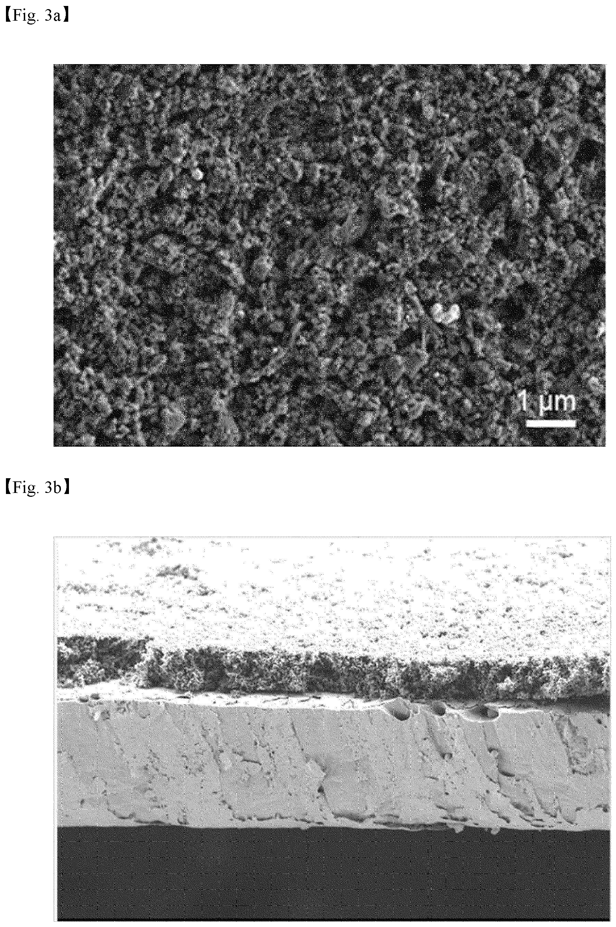

FIGS. 3A and 3B show surface and cross-sectional microstructures when the protective layer is disposed on the current collector.

Referring to FIGS. 3A and 3B, a surface and a cross-sectional structure after the protective layer was disposed can be confirmed.

### <Lithium Electrodeposition Process>

Thereafter, in order to form a lithium alloy or pure lithium metal between the protective layer and the current collector, an electrodeposition process was used to remove lithium from a lithium supply source and precipitate the lithium between the protective layer and the current collector. The plating solution used for such electrodeposition was prepared by adding, as a nitrogen-based compound, lithium bis(fluorosulfonyl)imide and lithium nitrate in amounts of 40 wt% and 5 wt%, respectively, based on 100 wt% of the plating solution, and adding fluoroethylene carbonate, which is a fluorine-based compound, in an amount of 5 wt% based on 100 wt% of the plating solution, to a 1,2-dimethoxyethane solvent.

As the lithium supply source, a lithium metal plate having a purity of 99.9% or more and a thickness of 500 µm was pressed onto a copper current collector plate (Cu plate) and used. After the lithium supply source and the current collector were stacked in the plating solution in an electrically insulated state, a current was applied using a power supply in a manner in which the lithium supply source and the current collector were used as (+) and (-) electrodes, respectively, to precipitate lithium between the current collector and the composite protective layer.

The current density of the electrodeposition process was increased stepwise in the order of 0.2 mA/cm², 0.5 mA/cm², and 1 mA/cm², electrodeposition was performed for 5 minutes at each current density, and then the maximum current density was set to 10 mA/cm². The electrodeposition time at the maximum current density was variably set according to the magnitude of the maximum current density by calculating a time at which a final cumulative lithium thickness of 10 µm could be electrodeposited.

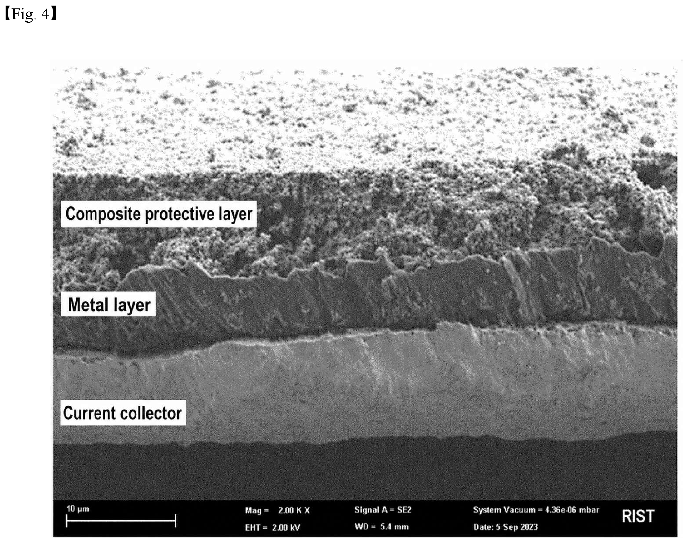

FIG. 4 shows a metal layer formed on a lower surface of a protective layer by an electrodeposition process.

Referring to FIG. 4, it was confirmed that a metal layer, which is an alloy layer including lithium, was formed by lithium provided from the lithium supply source between the current collector and the protective layer.

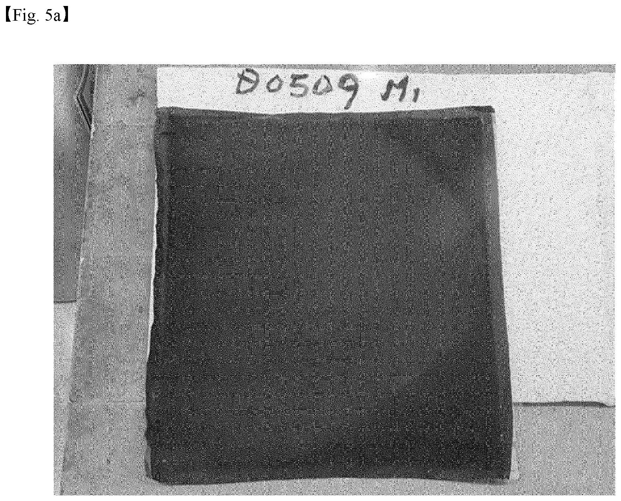

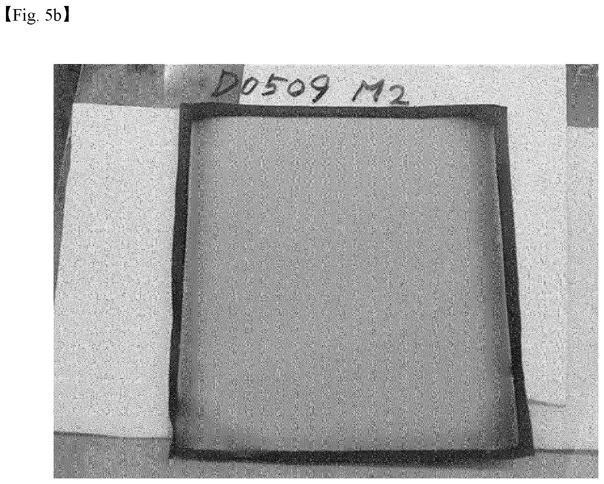

FIGS. 5A and 5B show electrodeposition appearances according to a maximum current density in electrodeposition processes according to an Example and a Comparative Example.

FIG. 5A shows an electrodeposition appearance when electrodeposition was performed at or below the maximum current density, and FIG. 5B shows an electrodeposition appearance when electrodeposition was performed above the maximum current density. Referring to FIGS. 5A and 5B, it can be confirmed that, when electrodeposition is performed at or below the maximum electrodepositable current density, precipitated lithium is stacked under the black protective layer, and thus the black protective layer is observed in appearance, and that, when electrodeposition is performed above the maximum electrodepositable current density, lithium is stacked on an upper surface of the protective layer, and grayish lithium is electrodeposited on the upper surface of the protective layer. Through this, the maximum current density was defined as the maximum electrodepositable current density at which lithium is precipitated between the current collector and the protective layer in the electrodeposition process.

### Manufacture of All-Solid-State Battery

An all-solid-state battery was manufactured by applying the negative electrode manufactured according to the above-described Example, and charge/discharge lifespan was evaluated. For evaluation of the all-solid-state battery cell, a pressurized dedicated evaluation cell manufactured by Terra Leader, capable of maintaining an inert atmosphere, was used. For manufacture of the all-solid-state battery cell, a sulfide-based argyrodite (Li₆PS₅Cl) solid electrolyte was used as an electrolyte, and the electrolyte was formed into a pellet having a thickness of about 0.7 mm. In order to secure a dense electrolyte, pressure was applied at 370 MPa.

Lithium having a thickness of 0.5 mm was attached to one surface of the electrolyte as a reference electrode, and the negative electrodes manufactured according to the Examples and Comparative Examples were attached to the opposite surface. The reference electrode and the evaluation electrode were attached to the solid electrolyte at a pressure of 50 MPa, and pressure was applied at 16 MPa in the dedicated evaluation cell during charge/discharge evaluation.

### <Example 2>

The same procedure as in Example 1 was performed, except that an average particle diameter of the Ag particles used to prepare the slurry used for forming the protective layer was 50 nm.

### <Example 3>

The same procedure as in Example 1 was performed, except that an average particle diameter of the Ag particles used to prepare the slurry used for forming the protective layer was 200 nm.

### <Comparative Example 1>

The same procedure as in Example 1 was performed, except that an average particle diameter of the Ag particles used to prepare the slurry used for forming the protective layer was 300 nm.

### <Comparative Example 2>

The same procedure as in Example 1 was performed, except that an average particle diameter of the Ag particles used to prepare the slurry used for forming the protective layer was 500 nm.

### <Comparative Example 3>

The same procedure as in Example 1 was performed, except that an average particle diameter of the Ag particles used to prepare the slurry used for forming the protective layer was 700 nm.

### <Comparative Examples 4-5>

The same procedure as in Example 1 was performed, except that an average particle diameter of the amorphous carbon particles used to prepare the slurry used for forming the protective layer was 20 nm and 300 nm, respectively.

### <Evaluation Example>: Evaluation According to Average Particle Diameter of Metal Particles

Table 1 below shows distribution degree of metal particles in the protective layer, maximum electrodeposition current, and the number of charge/discharge performance cycles when metal particles having different average particle diameters were included in forming the protective layer. The distribution degree of metal particles in the protective layer, maximum electrodeposition current, and number of charge/discharge performance cycles were measured by the following methods.

Distribution degree of metal particles in protective layer: The protective coating layer was configured by mixing amorphous carbon and a metal element, and EDS analysis evaluation was performed on a protective layer sample before electrodeposition. During EDS analysis, evaluation was performed in a mapping mode in order to identify distribution of each element, and in particular, additional analysis was performed by setting, as points, portions causing a difference in brightness in an SEM analysis image. Through the above-described method, when distribution of the metal particles in the protective layer was good, it was indicated as ○, when the distribution was normal, it was indicated as △, and when the distribution was inferior, it was indicated as ×.

Maximum current density (mA/cm²): The maximum current density means a limit of current density at which lithium electrodeposited according to the above process can be precipitated between the ion concentration protective layer and the current collector, and the maximum current density was measured.

Number of charge/discharge performance cycles (cycles): The reference electrode and the evaluation electrode were attached to the solid electrolyte at a pressure of 50 MPa, and pressure was applied at 16 MPa in the dedicated evaluation cell during charge/discharge evaluation. The charge/discharge evaluation was performed by defining, as one cycle, charging at a constant current of 2 mA/cm² for 0.5 hours and discharging at a constant current of 2 mA/cm² for 0.5 hours. The charge/discharge lifespan was defined as ending when a short circuit occurred between the reference electrode and the evaluation electrode during charging and discharging or when a voltage between the two electrodes exceeded 2 V.

**[Table 1]**

| Classification | Average Particle Diameter of Amorphous Carbon (nm) | Average Particle Diameter of Metal Particles (nm) | \|Average Particle Diameter of Metal Particles - Average Particle Diameter of Amorphous Carbon\| | Distribution Area of Metal Particles (%) | Distribution Degree of Metal Particles in Protective Layer | Maximum Electrodeposition Current (mA/cm²) | Number of Charge/Discharge Performance Cycles (cycles) |
|---|---|---|---|---|---|---|---|
| Example1 | 30 | 65 | 35 | 46 | ○ | 8 | 710 |
| Example2 | 30 | 50 | 20 | 49 | ○ | 8 | 892 |
| Example3 | 30 | 200 | 170 | 30 | Δ | 6 | 594 |
| Comparative Example 1 | 30 | 300 | 270 | 27 | × | 1 | 122 |
| Comparative Example 2 | 30 | 500 | 470 | 19 | × | 1 | 87 |
| Comparative Example 3 | 30 | 700 | 670 | 9 | × | - | - |
| Comparative Example 4 | 20 | 65 | 45 | 43 | △ | 6 | 575 |
| Comparative Example 5 | 200 | 65 | 135 | 37 | × | 2 | 279 |

Referring to Table 1, it was confirmed that Examples 1 to 3 had a higher distribution area of metal particles and a better distribution degree of metal particles in the protective layer than Comparative Examples 1 to 3. In addition, it was confirmed that the Comparative Examples were inferior to the Examples in charge/discharge performance characteristics. Specifically, it was confirmed that Comparative Examples 1 to 3, in which the average particle diameter of the metal particles was excessively large, had an inferior distribution area of metal particles and an inferior distribution degree of metal particles in the protective layer compared with the Examples. In addition, Comparative Example 4, in which the average particle diameter of the amorphous carbon was excessively small, and Comparative Example 5, in which the average particle diameter of the amorphous carbon was excessively large, also had an inferior distribution area of metal particles and an inferior distribution degree of metal particles in the protective layer compared with the Examples.

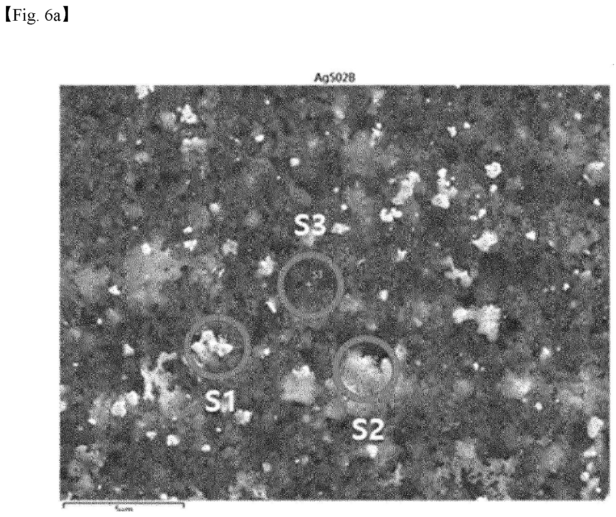

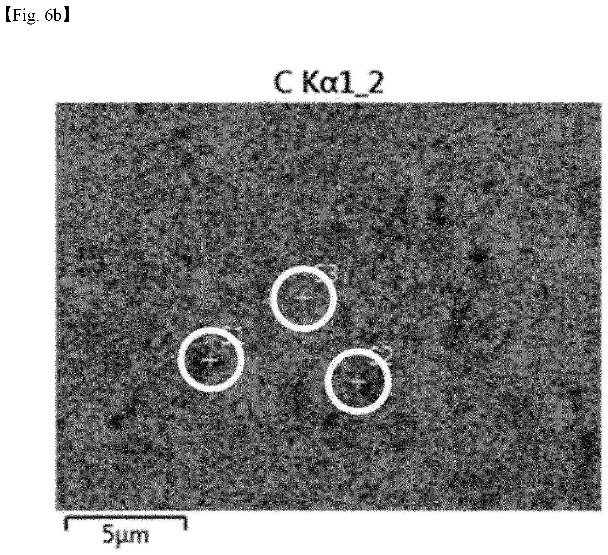

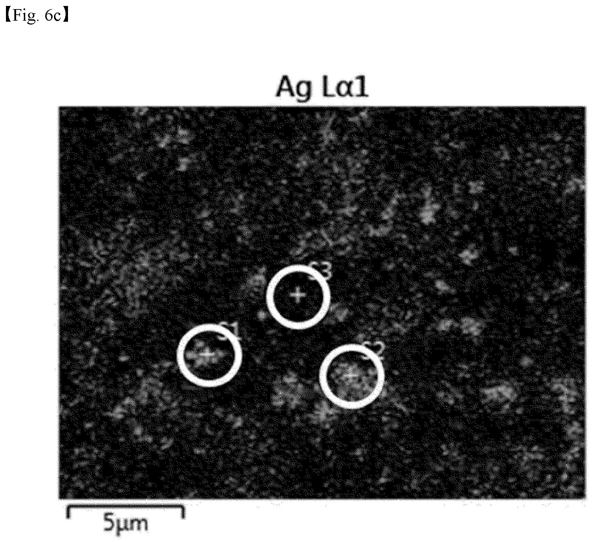

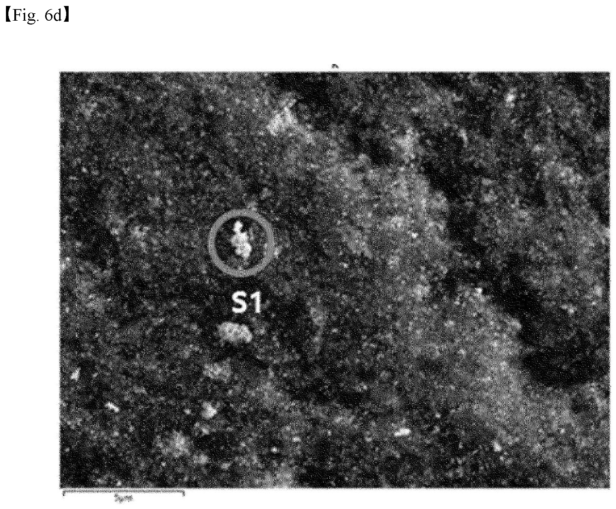

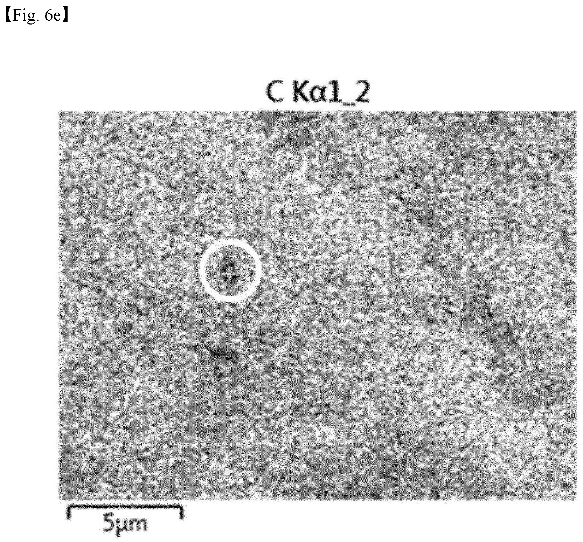

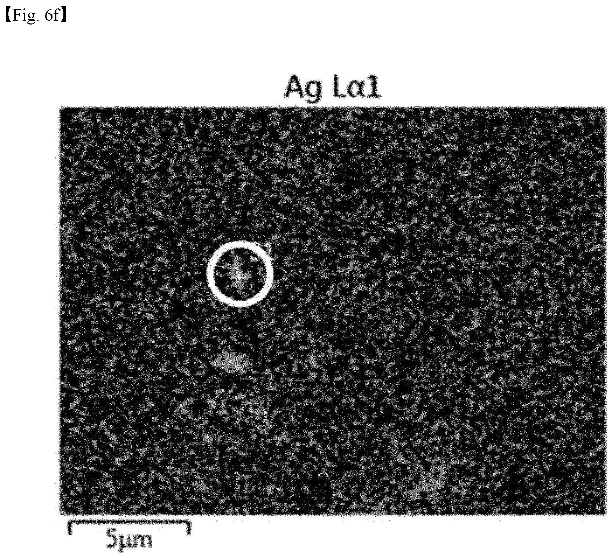

FIGS. 6A to 6C are EDS analysis photographs of a protective layer according to a Comparative Example of the present invention, and FIGS. 6D to 6F are EDS analysis photographs of a protective layer according to an Example of the present invention.

FIGS. 6A to 6C are EDS analysis photographs of the protective layer according to Comparative Example 1. Specifically, in Comparative Example 1, Ag having an average particle size of about 300 nm was used. In the corresponding sample, as a result of performing EDS analysis in a state in which the protective layer was coated on the current collector, C was detected from amorphous carbon, which is a main component, and Ag included in the protective layer was detected. When EDS results were examined by dividing portions in which a difference in brightness was clearly shown into S1, S2, and S3, in the case of S1 and S2, which are portions appearing bright close to white in the SEM analysis image, a C signal was weak and an Ag signal was strongly detected.

This means that Ag particles are agglomerated in the portions appearing white on SEM. Meanwhile, in the case of S3, which is a portion appearing relatively black, a C signal was strongly shown and an Ag signal was very weakly detected. This means that, contrary to S1 and S2, Ag particles are hardly present in the portions appearing black on SEM. Based on the analysis results, it can be confirmed that most portions are black because most of the protective layer is composed of amorphous carbon, but that white particles are significantly agglomerated and distributed.

FIGS. 6D to 6F are EDS analysis photographs of the protective layer according to Example 1. Specifically, in Example 1, Ag having an average particle size of about 65 nm was used. As a result of performing EDS analysis on the corresponding sample in a state in which the protective layer was coated on the current collector, C was detected from amorphous carbon, which is a main component, and Ag was detected from Ag particles included in the protective layer. When a relatively white portion in an SEM analysis image was set as a point and EDS analysis results of the same portion were examined, a C signal was weak and an Ag signal was strong, which means that the white portion had a high Ag content.

However, unlike Comparative Example 1, in Example 1, it can be confirmed that portions in which Ag particles are agglomerated rarely appear throughout the sample, and small Ag particles are evenly distributed.

Referring to FIGS. 6A to 6F and Table 1, it was confirmed that the Examples in which the average particle diameter of the metal particles in the protective layer was 400 nm or less had a better distribution degree of metal particles in the protective layer and a better number of charge/discharge performance cycles than the Comparative Examples in which the average particle diameter exceeded 400 nm. In the case of Comparative Example 3, in order to measure the maximum electrodeposition current, an experiment was performed by lowering the current density to 0.5 mA/cm² under existing experimental conditions, but even at the corresponding current, it was confirmed that a phenomenon in which lithium was precipitated on the upper surface of the protective layer occurred. Since lithium was electrodeposited on the upper surface of the protective layer even at a sufficiently low current, it was difficult to quantify the maximum electrodeposition current, and thus it was not indicated. In addition, in the case of Comparative Example 3, with respect to the number of charge/discharge performance cycles, the effect of the protective layer is achieved only when a cell is manufactured in a state in which lithium is stacked on the lower surface of the protective layer. However, when lithium is electrodeposited on the upper surface of the protective layer, it is difficult to perform an experiment under the same conditions even if a cell is manufactured. When a cell was manufactured without the protective layer, about 80% of the cells did not perform normal cycling and had an internal short circuit, and thus the result was not indicated.

In addition, among Examples 1 to 3, it was confirmed that Example 2 having an average particle size of 100 nm or less had a better distribution degree of metal particles and a better number of charge/discharge performance cycles than Example 3 having an average particle size of about 200 nm, and that Example 2 had a better distribution degree of metal particles and a better number of charge/discharge performance cycles than Example 3.

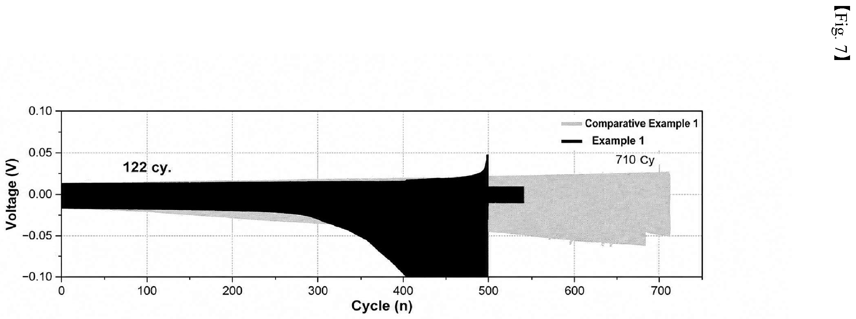

FIG. 7 shows results of charge/discharge lifespan evaluation of lithium metal electrodes according to Examples and Comparative Examples of the present invention.

Referring to FIG. 7, it was confirmed that the charge/discharge lifespan of Example 1 was 710 cycles, and the charge/discharge lifespan of Comparative Example 1 was 122 cycles, and thus the charge/discharge performance of Example 1, in which the average particle diameter of the metal particles in the protective layer was small, was superior to that of Comparative Example 1.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A lithium metal electrode comprising:
a current collector; and
a protective layer disposed on at least one surface of the current collector,
wherein the protective layer comprises a powder-type carbon-based material and powder-type metal particles, and
wherein an average particle diameter of the metal particles is 250 nm or less.

2. The lithium metal electrode of claim 1, comprising:
a metal layer disposed between the current collector and the protective layer,
wherein the metal layer comprises lithium.

3. The lithium metal electrode of claim 1,
wherein the metal particles in the protective layer are included in an amount of 10 wt% to 30 wt% based on 100 wt% of a total amount of the carbon-based material and the metal particles.

4. The lithium metal electrode of claim 1,
wherein the protective layer has a thickness of 3 µm to 7 µm.

5. The lithium metal electrode of claim 1,
wherein the carbon-based material comprises amorphous carbon, and
wherein the amorphous carbon comprises one or more selected from the group consisting of acetylene black, Super P black, carbon black, Denka black, activated carbon, graphite, hard carbon, and soft carbon.

6. The lithium metal electrode of claim 1,
wherein the metal particles are a lithiophilic metal.

7. The lithium metal electrode of claim 1,
wherein the metal particles comprise one or more selected from the group consisting of In, Ag, Sn, Zn, Si, Al, and Bi.

8. The lithium metal electrode of claim 1,
wherein the metal particles have an area of 30% to 50% based on 100% of an area of 17.5 µm × 22.5 µm in an SEM image of the protective layer.

9. The lithium metal electrode of claim 1,
wherein an average particle diameter of the metal particles is greater than an average particle diameter of the amorphous carbon.

10. The lithium metal electrode of claim 1,
wherein a difference value between the average particle diameter of the metal particles and the average particle diameter of the amorphous carbon is 10 nm to 250 nm.

11. A method for manufacturing a lithium metal electrode, comprising:
preparing a current collector; and
forming a protective layer by coating, on at least one surface of the current collector, a slurry comprising a powder-type carbon-based material and powder-type metal particles,
wherein an average particle diameter of the metal particles is 250 nm or less.

12. The method for manufacturing a lithium metal electrode of claim 11, further comprising, after forming the protective layer:
placing the current collector on which the protective layer is formed in a plating solution, and then placing a lithium supply source at a predetermined distance from the protective layer; and
applying a current between the current collector and the lithium supply source to form a metal layer comprising a lithium alloy in which the metal particles included in the protective layer and lithium precipitated from the lithium supply source are alloyed.

13. The method for manufacturing a lithium metal electrode of claim 11,
wherein, in forming the protective layer, the metal particles and the carbon-based particles are mixed at a weight ratio of 10:90 to 30:70.

14. The method for manufacturing a lithium metal electrode of claim 11,
wherein, in forming the protective layer, the slurry is coated to a range of 3 µm to 10 µm.

15. The method for manufacturing a lithium metal electrode of claim 14,
wherein, in forming the protective layer, a binder is further included in the slurry, and
wherein a content of the binder is 1 part by weight to 15 parts by weight based on 100 parts by weight of a total amount of the carbon-based material and the metal particles.
